# EUROPEAN PATENT APPLICATION

(11) **EP 4 521 088 A1**
(43) Date of publication of application: **12.03.2025**
(21) Application number: 24199035.7
(22) Date of filing: 06.09.2024
(51) Int. Cl.: G01M 5/00, F15B 19/00, G01M 99/00

(54) **CONTROLLED LOAD ABORT IN AN ACTUATOR SYSTEM**

(30) Priority: 08.09.2023 US 202363581465 P
(71) Applicant: Illinois Tool Works Inc., Glenview IL 60025 (US)
(72) Inventor: PLANT, Jonathan, Glenview, 60025 (US); ANDERSON, Bruce, Glenview, 60025 (US); CARLSON, Kevin, Glenview, 60025 (US)
(74) Representative: HGF

(57) **Abstract**

A method for unloading a load on a test article in a testing system includes determining a load differential in at least one of a calculated load at a valve for an actuator of the testing system and a calculated load on a load cell coupled to the actuator. A controlled unload of the load on the test article is initiated via a system controller when the determined load differential a reaches a first level. An interlock unload of the load on the test article is performed via the valve when the determined load differential reaches a second level higher than the first level.

## Description

### CROSS-REFERENCE TO RELATED APPLICATIONS

This application claims the benefit of priority from U.S. Provisional Patent Application No. 63/581,465 filed September 8, 2023 for "CONTROLLED LOAD ABORT IN AN ACTUATOR SYSTEM," the content of which is hereby incorporated by reference in its entirety.

### BACKGROUND

The discussion below is merely provided for general back-ground information and is not intended to be used as an aid in determining the scope of the claimed subject matter.

In testing systems, test articles under test are very expensive, and it is necessary to quickly and effectively reduce loading on the test article in certain situations so as to prevent damage to the test article.

### SUMMARY

This Summary and the Abstract herein are provided to introduce a selection of concepts in a simplified form that are further described below in the Detailed Description. This Summary and the Abstract are not intended to identify key features or essential features of the claimed subject matter, nor are they intended to be used as an aid in deter-mining the scope of the claimed subject matter. The claimed subject matter is not limited to implementations that solve any or all disadvantages noted in the Background.

In one aspect, a method for unloading a load on a test article in a testing system includes determining a load differential in at least one of a calculated load at a valve for an actuator of the testing system and a calculated load on a load cell coupled to the actuator. A controlled unload of the load on the test article is initiated via a system controller when the determined load differential reaches a first level. An interlock unload of the load on the test article is performed via the valve when the determined load differential reaches a second level higher than the first level.

In some embodiments, the commands to the valve are issued through the system controller.

Determining the load differential can be performed numerous ways and may include comparing a calculated load at the valve to a calculated load at the load cell, or determining the load differential may include determining load values for two outputs of the load cell, and assigning the load differential as a difference between the load values for the two outputs of the load cell, or determining the load differential may include comparing a calculated load at the valve to a commanded load at the valve, or determining the load differential may include comparing a load value output of the load cell to a commanded load at the valve. In some embodiments, determining the load differential is performed continuously during a flow mode of the testing system.

In some embodiments, initiating the controlled unload via the system controller may include unloading during a flow mode of the testing system to unload the load differential to a benign load differential.

Performing the interlock unload may include: isolating the valve from a source of hydraulic power of the testing system; taking measurements of pressures on a piston of the actuator; determining a load differential on opposite sides of a piston of the hydraulic actuator coupled to the valve; and ramping the load differential to a benign load differential using the valve.

Taking measurements of pressures on the piston may occur a predetermined delay time after isolating the valve.

If desired, ramping the load differential can be performed over a predetermined time period, and also if desried, ramping the load differential can be performed linearly over the predetermined time period.

In another aspect, a method of interlock unloading a test article in a test system with a valve controlling an actuator includes isolating the valve from a hydraulic source of the test system, and determining a load differential on opposite sides of a piston of the hydraulic actuator coupled to the valve. Then, the load differential is ramped to a benign load differential using the valve.

In some embodiments, the method and may include delaying a predetermined time between isolating and determining the load differential. If desired, ramping the load differential can be performed over a predetermined time period, and also if desried, ramping the load differential can be performed linearly over the predetermined time period. Determining the load differential can be performed using any of the methods indicated above.

In yet another aspect, a system for monitoring and unloading a load on a test article includes a hydraulic assembly and a controller. The hydraulic assembly incudes a control valve configured to control loads in a hydraulic actuator coupled to the test article, a pair of pressure transducers configured to detect and transmit pressures in the hydraulic actuator, and an isolation valve to isolate the control valve from hydraulic pressure. The controller is configured to determine a load differential in at least one of a calculated load at a valve for an actuator of the testing system and a calculated load on a load cell coupled to the actuator. A controlled unload of the load on the test article is initiated via a system controller when the determined load differential a reaches a first level. An interlock unload of the load on the test article is performed via the valve when the determined load differential reaches a second level higher than the first level.

In some embodiments, the testing system where the valve further may include a controller to receive the pressures, and valve firmware configured to reduce differential load on a piston of the hydraulic actuator. The valve firmware can be configured to perform an interlock unload of the load on the test article by: isolating the valve from a hydraulic source of the testing system; determining a load differential on a piston of the actuator coupled to the valve; and ramping the load differential to a benign load differential using the valve. Determining the load differential can be performed using any of the methods indicated above.

The valve firmware can be further configured to delay a predetermined time between isolating and determining the load differential. If desired, the valve firmware is further configured to ramp the load differential over a predetermined time period. If further desired, the valve firmware is configured to ramp the load differential linearly over the predetermined time period.

In some embdiments, the testing system and may include a power controller coupled between the controller and the hydraulic assembly to control power supplied to the valve and the hydraulic assembly, to receive and transmit signals indicative of loads on the hydraulic actuator and valve, and to receive and transmit commands from the controller.

In still another aspect, a hydraulic assembly includes a proportional valve configured to control a hydraulic actuator. The proportional valve has a controller to receive pressures indicative of a load on a test article, and the proportional valve operates valve firmware configured to reduce differential load on a piston of the hydraulic actuator.

In some embodiments, the hydraulic assembly may include a pair of pressure transducers configured to detect and transmit pressures at the hydraulic actuator to the proportional valve.

The valve firmware can be configured to perform an interlock unload of the differential load by: isolating the proportional valve from a source of hydraulic power to the hydraulic assembly; taking measurements of pressures on a piston of the actuator; determining a load differential on the piston of the hydraulic actuator; and ramping the load differential to a benign load differential using the valve. Determining the load differential can be performed using any of the methods indicated above.

In some embodiments, the valve firmware is further configured to take measurements of pressures on the piston a predetermined delay time after isolating the valve. If desired, the valve firmware is further configured to ramp the load differential over a predetermined time period. If further desired, the valve firmware is configured to ramp the load differential linearly over the predetermined time period.

The hydraulic assembly may include an isolation valve to isolate the proportional valve from the source of hydraulic power.

This summary is not intended to describe each disclosed embodiment or every implementation of controlled load abort as described herein. Many other novel advantages, features, and relationships will become apparent as this description proceeds. The figures and the description that follow more particularly exemplify illustrative embodiments.

### BRIEF DESCRIPTION OF THE DRAWINGS

FIG. 1 is a block diagram of a testing system according to an embodiment of the present disclosure;
FIG. 2 is block diagram of a hydraulic assembly according to an embodiment of the present disclosure;
FIG. 3 is a view of a test article under test according to an embodiment of the present disclosure;
FIGS. 4A and 4B are perspective views of a representative hydraulic assembly;
FIG. 5 is a hydraulic circuit diagram of an embodiment of the present disclosure;
FIG. 6 is a flow chart diagram of a method according to an embodiment of the present disclosure; and
FIG. 7 is a flow chart diagram of a method according to another embodiment of the present disclosure.

### DETAILED DESCRIPTION OF ILLUSTRATIVE EMBODIMENTS

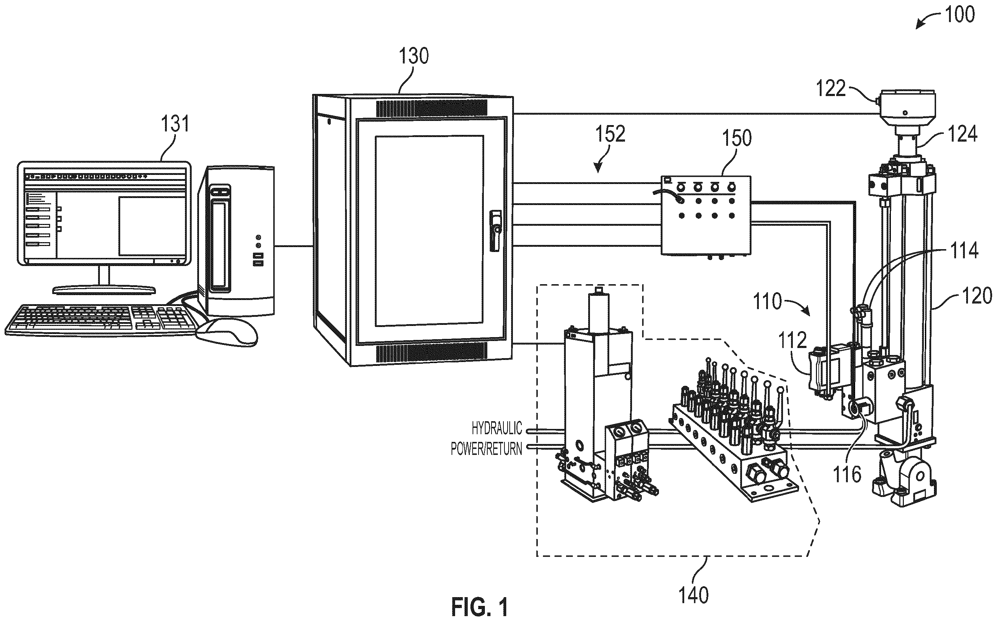

FIG. 1 illustrates a system 100 for monitoring and unloading a load on a test article. System 100 comprises in one embodiment a hydraulic assembly 110 and a system controller 130. Hydraulic assembly 110 comprises in one embodiment a control valve 112 configured to control loads in a hydraulic actuator 120 coupled to the test article. Hydraulic assembly 110 further comprises a pair of pressure transducers 114 which are configured to detect and transmit pressures in the hydraulic actuator 120. An isolation valve 116 is provided to selectively isolate the control valve 112 from a hydraulic source 140 of hydraulic pressure. In such a case, the control valve 112 can then locally reduce the load of the actuator 120 upon the test article pursuant to instructions executed by a local processor in the control valve without further direction from the system controller 130.

The system controller 130 in one embodiment is configured to determine a load differential in at least one of a calculated load at the control valve 112 for a hydraulic actuator 120 of the testing system 100 and a calculated load on a load cell 122 coupled to the hydraulic actuator. In a first method to unload the load on the test article by each actuator connected thereto, the system controller 130 is further configured to initiate a controlled unload of the load on the test article via the system controller 130 when the determined load differential reaches a first level. This controlled unload is done during a flow mode of the system, that is, when hydraulic source 140 is coupled to the system 100 and valve operation of each control valve 112 is controlled by the system controller 130. This first level may be referred to as a stop level. Should the stop level controlled unload not work, the controller 130 is further configured to perform an interlock unload of the load on the test article via commands sent to each control valve 112 of each actuator 120 needed to unload the loads on the test article when the determined differential load reaches a second level, higher than the first level, at which point a valve controlled unload, or interlock unload, is used to unload the load on the test article.

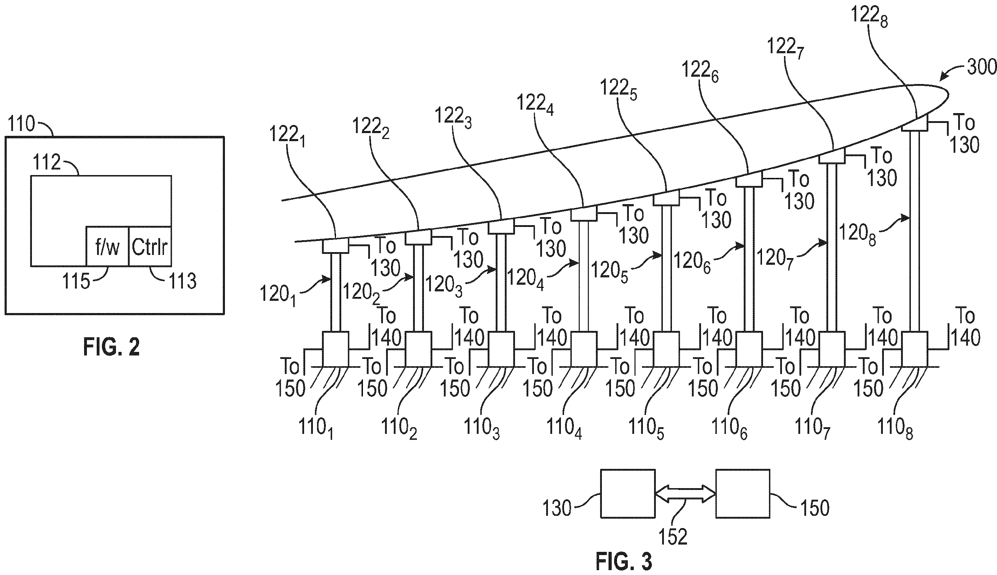

In one embodiment, the control valve 112 further comprises a local valve controller 113 to receive the pressures from the pressure transducers 114, and valve firmware 115 operable by the local controller 113 and configured to reduce differential load on a piston of the hydraulic actuator 120. The unloading of the load of the actuator by execution of the firmware 115 by the local valve controller 113 to control operation of its associated actuator 120, in one embodiment, is performed without further input from the system controller 130. The control valve 112 is shown in greater detail in FIG. 2.

The firmware 115 is in one embodiment configured to perform an interlock unload of the load on the test article. Generally, this is accomplished in one embodiment by isolating the control valve 112 from the hydraulic source 140 via operation of the isolation valve 116, (which can be initiated by the system controller 130 or in the alternative from the local controller 113 executing firmware 115), The local controller 113 determines a load differential on a piston 124 of the hydraulic actuator 120 coupled to the control valve 112, and operates the control valve 112 to ramp the load differential to a benign load differential using the control valve 112. This is done in an interlock situation by the control valve 112 alone, operating the firmware 115, upon receipt of an interlock unload command issued by the system controller 130.

System controller 130 is in one embodiment an external controller that runs software for operating the testing system 100 based on a testing procedure in a system computer 131 that provides a user interface to a user for configuration, operation and monitoring of the testing of the test article.

The firmware 115 of control valve 112 is designed to operate the control valve 112 independently of the system controller 130 to properly and safely ramp the load differential on a test article to a benign load differential. Test articles can be very expensive pieces of equipment with values in the millions of dollars. As used herein a "benign load differential" is a load differential upon the test article from the one or more actuators connected thereto that a test engineer considers is safe from any damage to the test article. Hence, some loading may exist upon the test article in a "benign load differential" state from one or more actuators but damage of the test article is not likely. A "benign load differential" may also be a load differential that does not provide any non-representative loading of the test article in the testing system.

In the testing system 100, multiple control valves 112 may be connected to multiple hydraulic actuators 120 that provide load to various positions or portions of a test article. In the exemplary embodiment illustrated in FIG. 3, a series of eight hydraulic actuators 120₁, 120₂, ..., 120s is shown, in which the hydraulic actuators 120₁, 120₂, ..., 120s are each controlled by a hydraulic assembly 110₁, 110₂, ..., 110s. The load cell 122 of each hydraulic actuator 120 is configured to provide load signals to the system controller 130. The pressure sensors 114 and the control valve 112 are also configured to provide load signals to the system controller 130. An isolation valve 116 is typically provided for each control valve 120. The system controller 130 controls operation of each isolation valve 116 and control valve 112 under "flow mode" when the test article is under test pursuant to a desired testing procedure.

The local firmware 115 of each control valve 112 in one embodiment is further configured to delay a predetermined time between isolating the hydraulic assembly 110 from the hydraulic source 140 and determining the load differential. This is done to allow a settling of the pressures following the isolation. The local firmware 115 is further configured in one embodiment to ramp the load differential over a predetermined time period. The predetermined time period may be programmed into the firmware 115 of the control valve 112 such as at set up. This ramp time may be adjusted by reprogramming the local firmware 115. The ramping of the load differential over the predetermined time period is in one embodiment performed linearly over the predetermined time period; however, it should not be considered limiting. Rather, unloading via a linear ramp is but one embodiment in that operation of each valve 112 by the local processor 113 pursuant to local firmware 115 of the valve can perform unloading pursuant to a non-linear ramp using the measured pressures from the pressure transducers 114 measuring cylinder pressures on each side of the actuator piston. Control valve 112 in one embodiment is a proportional valve.

The system 100 in one embodiment further comprises a power controller 150 coupled between the system controller 130 and the hydraulic assembly 110. The power controller 150 is operable to control power supplied to each control valve 112 and each isolation valve 116 of each hydraulic assembly 110 controlling each actuator 120, to receive and transmit signals indicative of loads on each hydraulic actuator 120 and each control valve 112, and to receive and transmit commands from the system controller 130 for loading the test article, and/or unloading the test article either as a controlled stop unload (under the control of the system controller 130 with command signals sent to each valve control 112) or as an interlock unload at each actuator 120 (under the control of the local processor 113 executing the local firmware 115 on control valve 112). Signals to and from power controller 150 from and to system controller 130 are carried in communication lines 152, which may be wired, wireless, or a combination thereof.

It should be noted that the same reference numerals are used in different Figures for same or similar elements. It should also be understood that the terminology used herein is for the purpose of describing embodiments, and the terminology is not intended to be limiting. Unless indicated otherwise, ordinal numbers (e.g., first, second, third, etc.) are used to distinguish or identify different elements or steps in a group of elements or steps, and do not supply a serial or numerical limitation on the elements or steps of the embodiments thereof. For example, "first," "second," and "third" elements or steps need not necessarily appear in that order, and the embodiments thereof need not necessarily be limited to three elements or steps. It should also be understood that, unless indicated otherwise, any labels such as "left," "right," "front," "back," "top," "bottom," "forward," "reverse," "clockwise," "counter clockwise," "up," "down," or other similar terms such as "upper," "lower," "aft," "fore," "vertical," "horizontal," "proximal," "distal," "intermediate" and the like are used for convenience and are not intended to imply, for example, any particular fixed location, orientation, or direction. Instead, such labels are used to reflect, for example, relative location, orientation, or directions. It should also be understood that the singular forms of "a," "an," and "the" include plural references unless the context clearly dictates otherwise.

Referring now to FIG. 2, a hydraulic assembly 110 is schematically illustrated and comprises the control valve 112 configured to control a hydraulic actuator such as 120. The control valve 112 is in one embodiment a proportional valve that has its own local controller 113 and local firmware 115 loaded therein to control operation of the control valve 112 during an interlock unload operation.

The hydraulic assembly 110 further comprises in one embodiment a pair of pressure transducers 114 (one for each port of the actuator 120) configured to detect pressures on opposite sides of the piston in each actuator and transmit signals indicative of measured pressures at the hydraulic actuator 120. The control valve 112 controller 113 is configured to receive the measured pressures which are indicative of a load on a test article. The control valve 112 in one embodiment operates local valve firmware 115 as discussed above, which is configured to remove differential load on the piston of the hydraulic actuator in an interlock unload situation, typically to the benign load differential for each associated actuator 120.

As discussed above, the local firmware 115 is configured in one embodiment to perform an interlock unload of the differential load that exists across the piston of the associated actuator. This is performed in one embodiment by isolating the control valve 112 from the hydraulic source 140 of hydraulic power to the hydraulic assembly 110. Following isolation, measurements of pressures on a piston such as piston 124 of an actuator such as hydraulic actuator 120 are made such as from pressure transducers 114. A load differential on the piston 124 of the hydraulic actuator 120 is determined, and the load differential is ramped to the benign load differential using the control valve 112. As has been discussed, the operation of the control valve 112 is, for an interlock unload, independent, and relies on its local controller 113 and firmware 115 to ramp the load differential to a benign load differential rather than under the supervision or control of the system controller 130, other than to initiate the interlock unload.

As has been discussed, the local firmware 115, in one embodiment, is further configured to take measurements of hydraulic pressures on opposite sides of the piston a predetermined delay time after isolating the control valve 112. The local firmware 115 is further configured to ramp the load differential existing on each associated actuator 120 over the predetermined time, and to do so, for example, linearly. In one embodiment, the hydraulic assembly 110 further comprises an isolation valve 116 used to isolate the control valve 112 from the source 140 of hydraulic power. In one embodiment, isolation valve 116 is a solenoid valve.

In normal operating conditions, the testing system 100 will have hydraulic pressure provided to actuators 120 by hydraulic source 140. The testing system 100 may have many hydraulic actuators 120, each coupled to the hydraulic source 140 through a manifold or other hydraulic distribution system. In one embodiment, the testing system 100 comprises a plurality of testing sub-systems, each sub-system comprising a plurality of hydraulic actuators. In one embodiment, each sub-system comprises eight hydraulic actuators 120 each having an associated control valve 112 and isolation valve 116, and has associated connections through power controller 150, which contains a power supply for the sub-system, and the ability to relay valve and actuator information to the system controller 130. In one embodiment, system controller 130 is a testing system controller such as a Flex Test 200 Controller manufactured by MTS Systems Corporation of Eden Prairie, Minnesota, USA.

The testing system 100 mitigates risk of non-representative loading or loading that can damage the test article being tested by the testing system 100 in several ways. There is a calculated load from the control valves 112 of the sub-system fed to the system controller 130 through the power controller 150. The system controller 130 determines potential load differentials from one or more actuators 120 that may not be operating correctly in various ways, as described further herein. If there is a possible test article load differential, then the system controller 130 can initiate a controlled unload, referred to above as a stop level or just "stop situation". In the stop situation, the system controller 130 is under control and uses normal operation in the testing system hydraulics to reduce the load differential while the hydraulic power is still provided. Failure of certain components in the testing system 100 may trigger a stop, or controlled unload, as is known in the art. However, monitoring of the pressure transducers and calculated and commanded loads on components of the testing system 100, and/or measured loads from associated load cells 122, may also result in the system controller 130 issuing a stop command.

In the event that a stop command is unsuccessful, that is, the load differential upon the test article is not being reduced or mitigated, that indicates a potential problem with the integrity of the system controller 130 or of the control loop of the testing system 100 to perform the stop command. In this situation, or if the load differential continues to increase to a second, higher level beyond the stop level, an interlock is ordered by the system controller 130 for one or more of the actuators 120, although commonly the command is initiated for all of the actuators 120. In a traditional interlock, non-representational or uneven unloading of a load on a test article may occur, potentially leading to damage to the test article. In embodiments of the present disclosure, an interlock results in a controlled, for example, linear unloading of load differential on the test article through the use of the control valves 112 as controlled by each local processor 113, which in an interlock condition, operate entirely on their own after receiving the interlock command. Local firmware 115 executed by each local processor 113 controls the unloading of the load differential to a benign load differential without the use of the system controller 130, typically other than initiating the interlock commands to each control valve 112.

Referring to FIG. 3, a sub-system of eight hydraulic assemblies 110₁, 110₂, ..., 110₈ is shown. Each hydraulic assembly 110₁, 110₂, ..., 110s is coupled to a manifold or the like of hydraulic source 140, to its own hydraulic actuator 120₁, 120₂, ..., 120₈, and to a power controller 150 over communication lines 152. The load cells 122₁, 122₂, ..., 122₈ are coupled to each associated actuator 120₁, 120₂, ..., 120₈ and the test article 300 so as to transmit the load from each actuator 120. It should be noted each load cell 122₁, 122₂, ..., 122₈ can provide one or more, for example, two signals indicative of the measured load thereon to the system controller 130. The control valves 112 of the hydraulic assemblies 110₁, 110₂, ..., 110₈ are coupled to hydraulic source 140 and to power controller 150, and receive instructions from the system controller 130 therethrough so as to execute the desired loading upon the test article 300 in normal operation, execute a stop situation as described above, or initiate an interlock unloading at each actuator 120₁, 120₂, ..., 120₈ via its associated control valve 112. On interlock, each valves of the hydraulic assemblies 110₁, 110₂, ..., 110₈ are isolated from the hydraulic source 140 and operate independently according to their local firmware 115 to ramp the load differential on their respective load cells/actuators to a benign load differential.

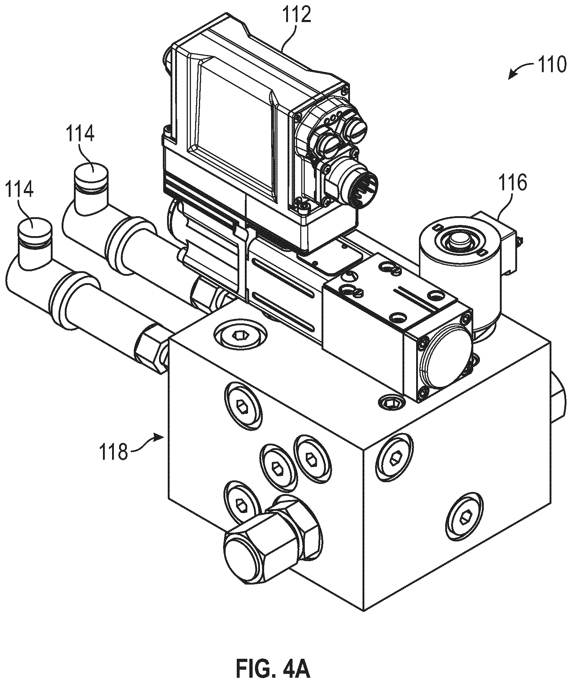

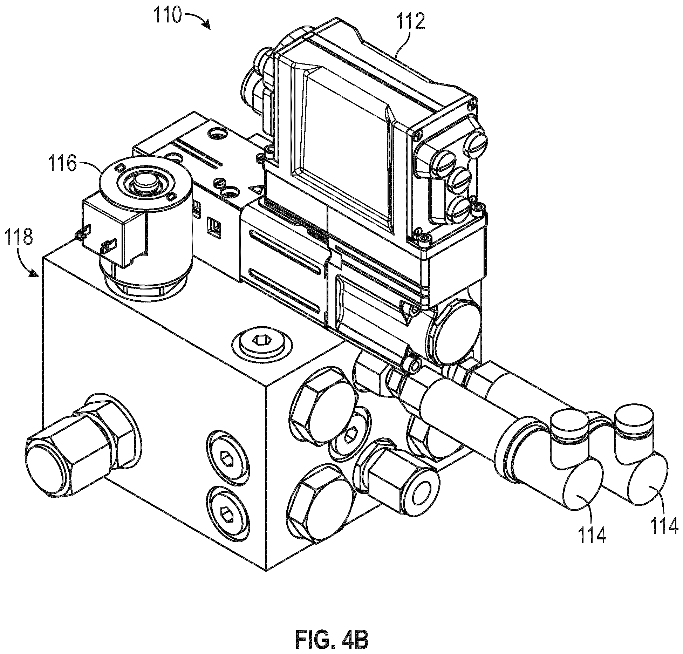

A representative design of one hydraulic assembly 110 configuration is shown in FIGS. 4A and 4B. Hydraulic assembly 110 is configured with a manifold 118 to which hydraulic lines may be connected. Control valve 112, pressure transducers 114, and isolation valve 116 are mounted to the manifold 118 in one embodiment. Isolation valve 116 in one embodiment is enabled by a solenoid.

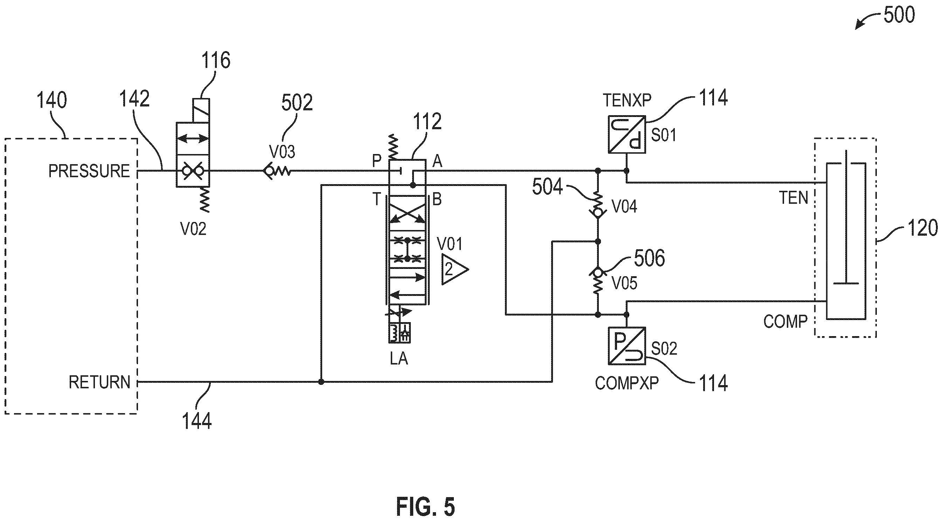

Figure 5 shows a hydraulic circuit 500 that is used for the provision of hydraulic power to the control valve 112 and hydraulic actuator 120. Hydraulic source 140 has pressure and return lines 142 and 144 providing hydraulic fluid to and from each control valve 112. Isolation valve 116 isolates the pressure line 142, and hence the hydraulic source 140, from the control valve 112, pressure transducers 114, and hydraulic actuator 120 on initiation of an interlock unload. In one embodiment, isolation valve is enabled with a solenoid. Once the isolation valve 116 isolates the control valve 112, transducers 114, and hydraulic actuator 120, local firmware 115 executing on local processor 113 in the control valve 112 determines the load differential existing in the associated actuator 120, and operates to ramp the load differential to a benign load differential for that actuator 120 without further input from a system controller 130. Check valves 502, 504, and 506 assist in regulating or controlling pressures in the hydraulic system 500.

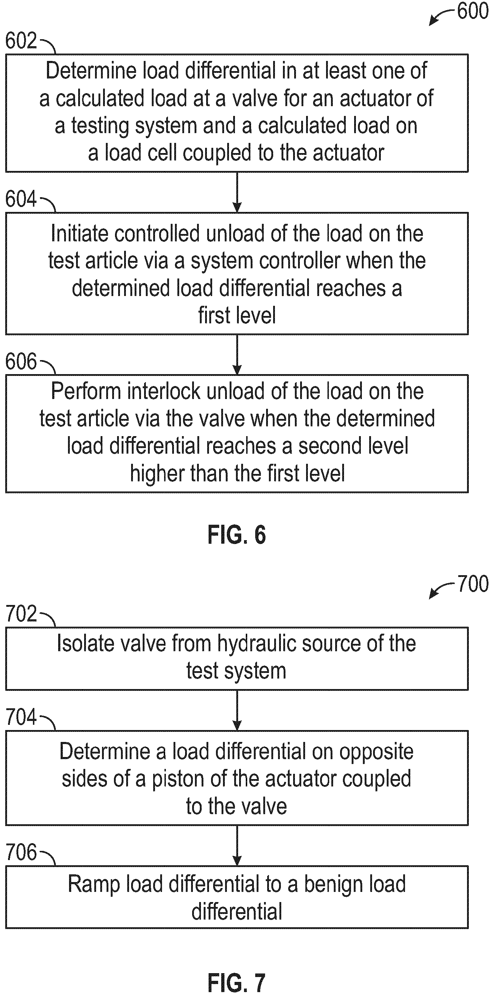

A method 600 for unloading a load on a test article in a testing system is shown in flow chart 600 in figure 6. Method 600 comprises determining the existence of possible test article load differential in at least one of a calculated load at a valve for an actuator of the testing system and a calculated load on a load cell coupled to the actuator in block 602, or other situation that requires the stop situation to be executed by the system controller 130. With respect to undesired loading on the test article, the method 600 further comprises initiating a controlled unload of the load on the test article via the system controller when the determined load differential reaches a first level in block 604. This first level may be referred to as a stop level or stop situation. A stop situation initiates the controlled unload of the load on the test article using the system controller. However, in the event the controlled unload via the system controller 130 executing in the stop situation is considered unsatisfactory, at block 606, an interlock unload of the load on the test article is performed via each valve of each actuator when the determined load differential reaches a second level, higher than the first level, after which a valve controlled unload, or interlock unload, is used to unload the load on the test article. Commands to each valve are in one embodiment issued through the system controller 130.

There are a number of potential load differential determinations that may be used in order to determine first level and correction first level for a stop, and a second load differential level for an interlock. The existence of a possible undesired load differential in the test article can be determined or ascertained using one or more different criteria. In one embodiment, determination comprises comparing a command load (desired from the actuator) as controlled by the associated valve to a measured load from the associated loadcell. In another embodiment, determining the load differential comprises determining whether load values for two outputs of the load cell as described above are different, and assigning the determined load differential as a difference between the load values for the two outputs of the load cell. In another embodiment, determining a load differential exists comprises comparing a calculated load at the valve to a commanded load at the valve. And in yet another embodiment, determining the load differential comprises comparing a load value output of the load cell to a commanded load at the valve.

Determining the load differential is performed in one embodiment continuously during a flow mode of the testing system, i.e., during normal operation of the test system 100 so as to conduct the desired test upon the test article. Each of the potential load differentials may be monitored, and a load differential on any of the methods that reaches the first, stop, level triggers a controlled unload stop situation via commands issued by the system controller 130 in response to the determined load differential. When a stop, or controlled unload, does not lower the load differential and the load differential rises to a second level higher than the first level, an interlock unload is commanded by the system controller 130. Performing an interlock unload at each of one or more actuators 120 (commonly all actuators) comprises in one embodiment isolating each control valve 112 from the source of hydraulic power 140 of the testing system, and taking measurements of pressures on opposite sides of the piston of the actuator 120, for example, via the pressure transducers 114 coupled to each port of the actuator 120. The load differential across the piston is determined, and is ramped to a benign load differential using the control valve 112 under the control of the local processor 113 executing the local firmware 115. Taking measurements of pressures on the piston occurs in one embodiment after a predetermined delay time following isolation of the valve so that the loading upon the test article 120 can be properly ascertained. Ramping of the load differential is performed in one embodiment over a predetermined time period, and in one embodiment is performed linearly over the predetermined time period.

Interlock unloading of the test article in a test system is performed according to method 700 which is shown in FIG. 7. Method 700 pertains to the operation of each hydraulic circuit 500 given the interlock command from the system controller 130. The method comprises isolating the control valve 112 from a hydraulic source 140 of the test system in block 702, in one embodiment by operation of isolation valve 116, and determining a load differential on opposite sides of a piston of the actuator coupled to the valve in block 704. The load differential is ramped to a benign load differential using the valve in block 706. The method 700 may further comprise delaying a predetermined time between isolating and determining the load differential. It should also be noted that typically, the initial load differential existing for each actuator as measured by the pressure transducers 114 is saved in memory at the control valve 112 and used by the local processor 113 executing the local firmware 115. The initial pressures are used to ascertain the load differential desired during ramping to the benign load differential. The measured pressures from pressure transducers 114 are continually received by the local processor so that the control valve 112 is controlled to achieve the desired decreases in the load differential during the unloading. Ramping of the load differential, as has been discussed, may be done over a predetermined time, and may, for example, be performed linearly over the predetermined time period. It should be noted, in one embodiment, the predetermined delay and the predetermined time period is substantially the same for all actuators 120 coupled to the test article. This can be advantageous for even though each control valve 112 is operating independently, the loads from the actuators 120 are each being reduced beginning at substantially at the same time and at a percentage rate pursuant to the stored unloading instructions in the local firmware 115. Therefore, the unloading upon the entirety of the test article occurs in a somewhat balanced manner across the test article so as to reduce the possibility of damage to the test article during unloading.

Embodiments of the present disclosure therefore provide methods and systems for controlled unload of load differential on a test article in a testing system upon load differential reaching a first, stop level, and safe linear interlock unloading should the load differential reach a second higher, interlock level.

The above-disclosed subject matter is to be considered illustrative, and not restrictive, and the appended claims are intended to cover all such modifications, enhancements, and other embodiments, which fall within the true scope of the present disclosure. Thus, to the maximum extent allowed by law, the scope of the present disclosure is to be determined by the broadest permissible interpretation of the following claims and their equivalents, and shall not be restricted or limited by the foregoing detailed description.

## Claims

1. A method for unloading a load on a test article in a testing system, comprising:
determining a load differential in at least one of a calculated load at a valve for an actuator of the testing system and a calculated load on a load cell coupled to the actuator;
initiating a controlled unload of the load on the test article via a system controller when the determined load differential a reaches a first level; and
performing an interlock unload of the load on the test article via the valve when the determined load differential reaches a second level higher than the first level.

2. The method of claim 1, wherein determining the load differential comprises:
comparing a calculated load at the valve to a calculated load at the load cell; or
determining load values for two outputs of the load cell, and assigning the load differential as a difference between the load values for the two outputs of the load cell; or
comparing a calculated load at the valve to a commanded load at the valve; or
comparing a load value output of the load cell to a commanded load at the valve.

3. The method of any of claims 1-2, wherein determining the load differential is performed continuously during a flow mode of the testing system.

4. The method of any of claims 1-3, wherein initiating the controlled unload via the system controller comprises unloading during a flow mode of the testing system to unload the load differential to a benign load differential.

5. The method of any of claims 1-4, wherein performing the interlock unload comprises:
isolating the valve from a source of hydraulic power of the testing system;
taking measurements of pressures on a piston of the actuator;
determining a load differential on opposite sides of a piston of the actuator coupled to the valve; and
ramping the load differential to a benign load differential using the valve.

6. The method of claim 5, wherein taking measurements of pressures on the piston occurs a predetermined delay time after isolating the valve.

7. The method of claim 5, wherein ramping the load differential is performed over a predetermined time period, and in one embodiment, ramping the load differential is performed linearly over the predetermined time period.

8. A method of interlock unloading a test article in a test system with a valve controlling an actuator, comprising:
isolating the valve from a hydraulic source of the test system;
determining a load differential on opposite sides of a piston of the actuator coupled to the valve; and
ramping the load differential to a benign load differential using the valve.

9. The method of claim 8, and further comprising delaying a predetermined time between isolating and determining the load differential, and/or wherein ramping the load differential is done over a predetermined time period, and in one embodiment, ramping the load differential is performed linearly over the predetermined time period.

10. A testing system for monitoring and unloading a load on a test article, comprising:
a hydraulic assembly, comprising:
a control valve configured to control loads in a hydraulic actuator coupled to the test article;
a pair of pressure transducers configured to detect and transmit pressures in the hydraulic actuator; and
an isolation valve to isolate the control valve from hydraulic pressure;
a controller configured to:
determine a load differential in at least one of a calculated load at a valve for an actuator of the testing system and a calculated load on a load cell coupled to the actuator;
initiate a controlled unload of the load on the test article via a system controller when the determined load differential a reaches a first level; and
perform an interlock unload of the load on the test article via the valve when the determined load differential reaches a second level higher than the first level.

11. The testing system of claim 10, wherein the valve further comprises a controller to receive the pressures, and valve firmware configured to reduce differential load on a piston of the hydraulic , and in one embodiment, wherein the valve firmware is configured to perform an interlock unload of the load on the test article by:
isolating the valve from a hydraulic source of the testing system;
determining a load differential on a piston of the actuator coupled to the valve; and
ramping the load differential to a benign load differential using the valve.

12. A hydraulic assembly, comprising:
a proportional valve configured to control a hydraulic actuator, the proportional valve having a controller to receive pressures indicative of a load on a test article, the proportional valve operating valve firmware configured to reduce differential load on a piston of the hydraulic actuator.

13. The hydraulic assembly of claim 12, and further comprising a pair of pressure transducers configured to detect and transmit pressures at the hydraulic actuator to the proportional valve.

14. The hydraulic assembly of any of claims 12 - 13, wherein the valve firmware is configured to perform an interlock unload of the differential load by:
isolating the proportional valve from a source of hydraulic power to the hydraulic assembly;
taking measurements of pressures on a piston of the actuator;
determining a load differential on the piston of the hydraulic actuator; and
ramping the load differential to a benign load differential using the valve.

15. The hydraulic assembly of any of claims 12 - 14, wherein the valve firmware is further configured to take measurements of pressures on the piston a predetermined delay time after isolating the valve, and/or wherein the valve firmware is further configured to ramp the load differential over a predetermined time period, and in one embodiment, the valve firmware is further configured to ramp the load differential linearly over the predetermined time period.
